# EUROPEAN PATENT APPLICATION

(11) **EP 3 190 566 A1**
(43) Date of publication of application: **12.07.2017**
(21) Application number: 16305006.5
(22) Date of filing: 05.01.2016
(51) Int. Cl.: G06T 7/00, H04N 13/02, H04N 13/00, H04N 5/247, H04N 5/225, H04N 5/232, H04N 5/222, G03B 35/00

(54) **SPHERICAL VIRTUAL REALITY CAMERA**

(71) Applicant: Giroptic, 59000 Lille (FR)
(72) Inventor: OLLIER, Richard, 59110 La Madeleine (FR); DE ROCQUIGNY DU FAYEL, Arnould, 59000 Lille (FR)
(74) Representative: Grünecker Patent- und Rechtsanwälte PartG mbB

(57) **Abstract**

The present invention relates to an image capturing device suitable for capturing images for 3D reconstruction of the captured scene. Such image capturing device comprises a plurality of optical groups facing in different directions, wherein each optical group comprises at least a head lens and an image sensor. The optical groups are arranged in a manner that their respective fields of view overlap in a common capturing area. The image capturing device further comprises a controller for controlling the at least three optical groups to capture respective at least three images in parallel.

## Description

The present invention relates to a device for capturing a plurality of images suitable for displaying on virtual reality devices.

### BACKGROUND OF THE INVENTION

In the field of image capturing and motion picture capturing, cameras are implemented not only as standalone devices but also in a variety of personal electronic devices, such as mobile phones, tablets, laptops, wearable equipment (such as watches) and similar electronics devices. These cameras have a wide range of technical features and implementations. Crucial quality criteria for cameras are their spatial and temporal resolution as well as features of their optics such as the field of view.

The virtual reality headset (sometimes called "glasses" or Head Mounted Display (HMD)) typically operate as a receiver which receives the images to be displayed from a computer or a smartphone or the like. The term "virtual reality" (VR) means that a viewing person may select the point of view. It is assumed that the headset provides a 3D view by providing separate images for the respective eyes in order to display depth. The headset has typically capability of tracking movement of the user's head. The movement may include rotation and translation. Based on the tracked movement, the 3D content adapted to the movements of the headset may be displayed.

With a development of new viewing equipment such as the virtual reality headset, it becomes attractive to provide a capturing device capable of capturing images which may be viewed with such viewing equipment.

Currently, panoramic and spherical capturing devices are available, which can capture 2D spherical video, i.e. a video stream in which each frame captures images covering the entire sphere around. A spherical camera includes a plurality of camera optics capturing its surroundings in parallel. The plurality of cameras covers the entire sphere. After capturing, the respective images taken by the cameras are stitched to allow for viewing the sphere without visible transitions between the separately taken images. Spherical camera requires a compact design in order to avoid stitching errors, so that the stitched image looks as if it were taken from the same spot. For instance, a cubic spherical camera is known, which have 6 cameras looking into 6 different directions and capturing the 6 respective views which are stitched together to form a sphere.

Spherically captured video may be displayed in a headset and allow for tracking rotation (around vertical and/or horizontal axis) of the user head to view different parts of the captured sphere. However, other types of user's movement cannot be tracked since there are no data captured from which images could be generated for view points other than the capturing point. In other words, based on the spherical videos, translation movement of the user cannot be tracked since it is a change of the view point which requires also additional data to be captured. The missing data may be interpolated to some extend and direction of translation, but this may result in occurrence of some artifacts and there may be unseen areas which cannot be correctly interpolated.

Additional depth may be provided by stereoscopic capturing performed, for instance by capturing the scene with two cameras located in a distance corresponding to the approximate distance of the human eyes. Such capturing enables 3D viewing and may slightly improve the interpolation capability but it still does not provide for translation tracking. In order to enhance the above mentioned spherical camera to also provide a stereoscopic view, the number of cameras capturing the scene at the same time has to be doubled. Accordingly, in order to capture the entire sphere and to provide some 3D illusion by stereoscopic view, the above mentioned cubic spherical camera has to be extended to 12 cameras, a pair of cameras capturing each of the 6 directions. Such arrangement is rather inefficient. It requires 12 cameras which is expensive and results in a large size. Moreover, such arrangement may make stitching more difficult since the 12 cameras cannot be arranged in a sufficiently compact manner. Still further, even with such 12 cameras, translation tracking still cannot be provided.

An example of such capturing apparatus can be seen in Figure 1, which shows a stereoscopic capturing apparatus according to US 2014/0153916 A1. The device 100 provides a pair of cameras 101, 102, 103, and 104 for each captured direction in order to provide a true stereoscopic view.

In order to provide virtual reality feeling for the viewing person, not only depth and rotation but also translation in all 3 directions should be possible while still keeping the size and complexity of the camera as small as possible.

### SUMMARY OF THE INVENTION

The aim of the present invention is to overcome the aforementioned drawbacks by proposing a capturing apparatus for virtual reality images.

This is achieved by the features of independent claims.

Further advantageous embodiments are subject matter of the dependent claims.

It is the particular approach of the present invention to provide an image capturing apparatus which captures each direction with at least three cameras in parallel.

One of the advantages of such capturing apparatus is that it enables for viewing the scene in 3D with depth and supporting translation tracking.

In particular, according to an aspect of the present invention, an image capturing apparatus is provided for capturing images for virtual reality rendering. The apparatus comprises at least three optical groups facing in different directions, wherein each optical group comprises at least a head lens and an image sensor; the at least three optical groups being arranged in a manner that their respective fields of view overlap in a common capturing area. The apparatus further comprises a controller for controlling the at least three optical groups to capture respective at least three images in parallel.

Advantageously, the at least three optical groups are arranged to have optical axes of the respective head lenses substantially orthogonal, in particular orthogonal, to each other.

According to an embodiment of the invention, the image capturing apparatus comprises six optical groups with head lenses arranged on sides of a virtual cube wherein each three head lenses of the respective three neighboring optical groups having their optical axes substantially orthogonal to each other, so that each captured direction in the space can is seen by at least three optical groups.

For instance, the head lens and the sensor of each optical group are located on the same optical axis. However, this arrangement is not to limit the invention and other arrangement using reflective elements may be possible.

The control unit is beneficially configured to capture video with a predetermined frame rate and to capture in each frame time instance an image by each optical group. In particular, the images may be captured by all optical groups substantially at the same time. The term substantially means that there may be some misalignments for instance, due to imprecision of the synchronization. A buffer may also be a part of the image capturing apparatus to compensate for such misalignments.

According to an aspect of the present invention, a virtual reality system is provided comprising the image capturing device as described above, further comprising a storage unit for storing the captured images in a separable format. A separable format means that the images may be retrieved as captured. The format may be a raw or a compressed format.

The virtual reality system advantageously further comprises a preview unit for generating a live preview by stitching at least two images captured by two optical groups including at least one of blending the images on stitching boundaries, performing white balancing, exposure control, gain control, stabilization of the captured video based on gyroscope data or down-sampling of frame rate.

The preview unit is configured to generate the preview based on a captured frame within time duration not larger than the time between capturing of two frames. There may be a latency of one or more frames between the capturing of a frame and its preview generating. However, the present invention is not limited to this embodiment. In general, the frame rate of the preview images may also be reduced with respect to the original captured video so that also larger generation times are possible.

Moreover, the virtual reality system advantageously further comprises a user interface for receiving a user input indicating a desired view point, and a rendering unit for generating a 3D view from the desired view point by combining images captured by at least three of the optical groups to obtain each point of the generated 3D view.

The 3D view is advantageously a stereoscopic view to be displayed on a headset such as glasses or helmet or a similar head mounted device

According to another aspect of the present invention, a method is provided for capturing and displaying 3D videos, comprising the steps of capturing a frame of a 3D view of a predetermined scene area comprising capturing at least three images of the predetermined scene taken by three respective optical groups viewing the predetermined scene from different directions, receiving a user input indicating a desired view point, and generating a 3D view of the predetermined scene seen from the desired view point by combining information from the captured at least three images, as well as displaying the generated 3D view of the predetermined scene.

The three images are advantageously taken by respective three optical groups each including a head lens and a sensor and adapted to capture at least a half-sphere, the three optical groups being arranged orthogonal to each other.According to an embodiment, the step of capturing a frame of a 3D view is a step of capturing six images of a spherical 3D view, wherein each direction is captured by at least three of six optical groups arranged on sides of a virtual cube and each having a field of view of at least 180°.

The method may further comprise at least one of the following image correcting steps: dewarping of the captured images, white balance, exposure control, or gain control. Moreover, the method may further comprise storing the corrected images in a separable manner and/or a step of generating a preview of the captured frame by stitching at least two of the images captured for the frame.

According to an embodiment, the image capturing apparatus further captures the orientation (such as yaw, pitch, roll) of the camera and/or its GPS coordinates and stores this information together with the captured images. In case of video capturing, the capturing and storing of this additional information may be performed each K frames, K being equal to or larger than 1. The K may be adjustable by a user or may be automatically selected by the system based on the amount of movement of the image capturing device.

The above and other objects and features of the present invention will become more apparent from the following description and preferred embodiments given in conjunction with the accompanying drawings in which:

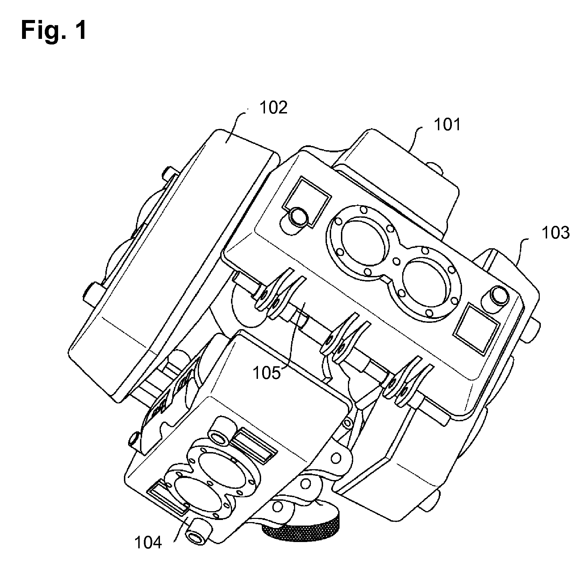

- Figure 1: is a schematic drawing illustrating an example of stereoscopic image capturing camera;
- Figure 2: is a schematic drawing illustrating an exemplary optical group;
- Figure 3A: is a schematic drawing illustrating an exemplary optical group with all elements on the same optical axis;
- Figure 3B: is a schematic drawing illustrating an exemplary optical group with elements on different axes;
- Figure 4: is a schematic drawing of an optical system for capturing images for VR reconstruction with three cameras;
- Figure 5: is a schematic drawing of an optical system for capturing images for VR reconstruction with six cameras;
- Figure 6: is a schematic drawing illustrating the reconstruction possibilities of the system shown in Figure 5;
- Figure 7: is a block diagram illustrating functional structure of an image capturing device for capturing images for 3D reconstruction;
- Figure 8: is a schematic drawing illustrating storing format of the captured images;
- Figures 9A to 9D: are a block diagrams illustrating embodiments of a virtual reality system;
- Figure 10: is a schematic drawing illustrating example of devices embedding the virtual reality system;
- Figure 11: is a flow diagram showing an exemplary method for capturing and viewing 3D images or videos;
- Figure 12: is a schematic drawing illustrating examples of cubic projection faces; and
- Figure 13: is a schematic drawing illustrating capturing of an image to be projected into a projection face after some processing.

### DETAILED DESCRIPTION

When generating VR based on captured 2D images, the possibility of changing the point of view is limited by the available captured images. In order to reconstruct a 3D scene which is necessary in order to be able to display the scene from another point of view, each 3D space point should be displayed from at least three cameras. Then, the reconstructed 3D scene may be used to generate a stereoscopic view for the user from the desired viewpoint. However, it is technically very complex to provide a sufficient number of viewpoints from which each single scene is captured. While such approach may be feasible for still images, video capturing with a huge number of cameras has a limited practicability and would result in high costs.

Another possibility is to interpolate the views which were not captured based on the views that were captured. This required generating intermediate images, i.e. images to be displayed, which are interpolated from two or more captured 2D images. Translation is a movement of the user in a 3D space with up to 6 degrees of freedom (up-down, left-right, back-forward). A 3D reconstruction based on multiple-view images has basically as output a set of 3D points and as input for each camera a set of image points. The effect of a set of cameras on a 3D scene can be considered as respective projections into 2D. The task of the 3D reconstruction based on multiple-view images is to reconstruct the 3D scene based on the 2D projections and knowledge of camera position. Approaches for 3D reconstruction are known from prior art. For instance, paper by J.Weng, P.Cohen and N.Rebiho titled "Motion and structure estimation from stereo image sequences," IEEE transaction on robotic and automation, 8(3), pages 362-382, 1992 shows an approach for estimating motion and structure of a stereo video system. It thus also shows relation between points in the 3D space and the stereo image. Some fundamentals of stereoscopic vision and its application to robotics and 3D modeling of scene can be found in the book by N.Ayache, titled "Vision stéréoscopique et perception multisensorielle. Application à la robotique mobile," Interedition, Paris, 1989.

In general, in order to reconstruct 3D, images capturing the same points from possibly different angles (or cameras with possibly different directions of fields of view) are advantageous to be able to see each spot of the captured image from possibly different sides so that for generation of each intermediate 3G image (view point), there is enough data to perform the interpolation.

In order to obtain such set of multi-view images, according to the invention, an image capturing device (a VR camera) is provided with a plurality of optical groups looking into different directions and simultaneously capturing images. The field of view of the cameras should overlap so that each 3D point to be reconstructed is seen at least by two cameras to enable 3D reconstruction of translation movement along the line between the cameras, i.e. within the scene captured by both cameras. In order to enable also tracking of translation other than along the line, additional cameras are necessary. In particular, with three images capturing the same scene point from three different directions so that the optical axes of the capturing optical groups are not located in the same plane, an arbitrary translation may be tracked

Therefore, the embodiment of the present invention provides an image capturing device for capturing images for virtual reality rendering, which comprises at least three optical groups facing in different predetermined directions. Each optical group comprises at least a head lens and an image sensor. It may comprise further one or more lenses for guiding light between the head lens and the sensor. The at least three optical groups are arranged in a manner that their respective fields of view overlap in a common capturing area. The image capturing device further comprises a controller for controlling the at least three optical groups to capture respective at least three images in parallel.

### Optical arrangement

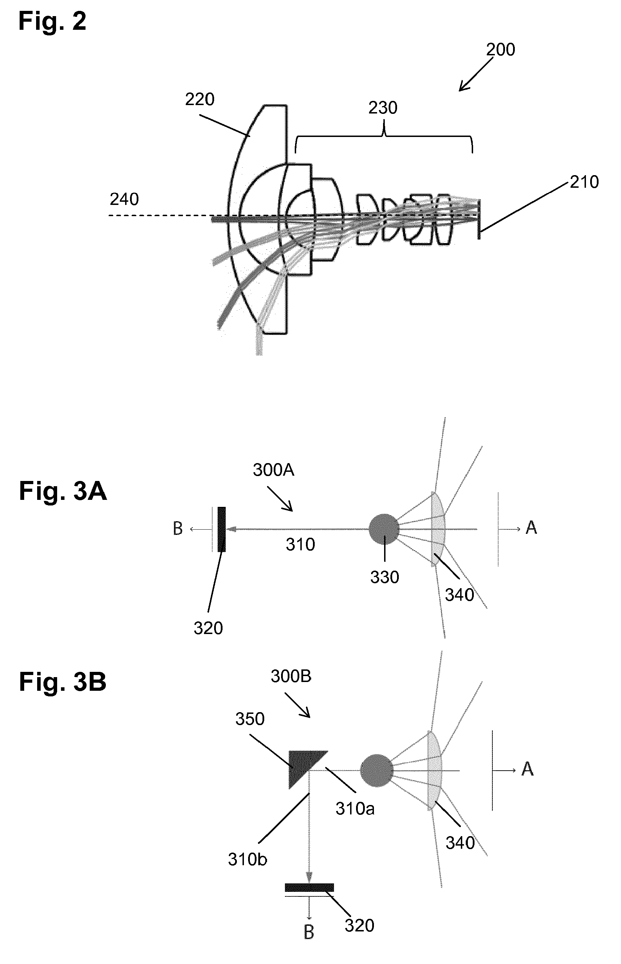

An exemplary optical group is shown in Figure 2. The optical group 200 is arranged on the same axis 240. Light enters the optical group 200 through a head lens 220 and passes a set of lenses 230 to be captured by image sensor 210. This exemplary optical group provides a field of view of 180 degrees.

However, it is noted that the present invention is not limited to this exemplary optical group or its field of view. Figures 3A and 3B illustrate two other and more general examples of optical groups that may be used.

In particular, Figure 3A shows an optical group 300A similar to that of Figure 2, having a head lens 340 and a sensor 320 located on the same optical axis (A, B). Also on the same optical axis one or more further lenses 330 may be arranged through which the light 310 passes before being captured by the sensor 320.

Figure 3B on the other hand shows an optical group 300B of which the lens 340 has an optical axis A different from the optical axis B of the sensor 320. In this figure, the optical axis A of the head lens is orthogonal on the optical axis B of the sensor. This is achieved in that the optical group 300B further comprises a reflective element 350, which may be a prism, a mirror or any other means for reflecting the light. In particular, the light entering the head lens 340 passes through the head lens 310a and is reflected on the reflective element 350 two continue 310b to the sensor 320. An optical group in which the optical axis of the sensor and the head lens differ may be beneficial for achieving a compact arrangement of a plurality of such optical groups within a common housing or for matching some particular design features of the housing.

Figure 3B illustrates possible further lenses belonging to the optical group 300B and located on the same optical axis A as the head lens. However, this example is not limiting and these further lenses may also be located at least partly on the same optical axis B as the sensor 320. Alternatively, the angle between the optical axis A of the head lens and the optical axis B of the sensor may be more or less than the right angle (90°). In other words, the present invention is not limited by the form of the optical group.

It is advantageous if the optical groups provide a wide field of view since then the number of optical groups necessary to cover each captured scene point with at least three optical groups can be reduced.

In particular, it is beneficial if the at least three optical groups are arranged to have optical axes of the respective head lenses orthogonal to each other and each of the optical groups covers a field of view of at least 180°.

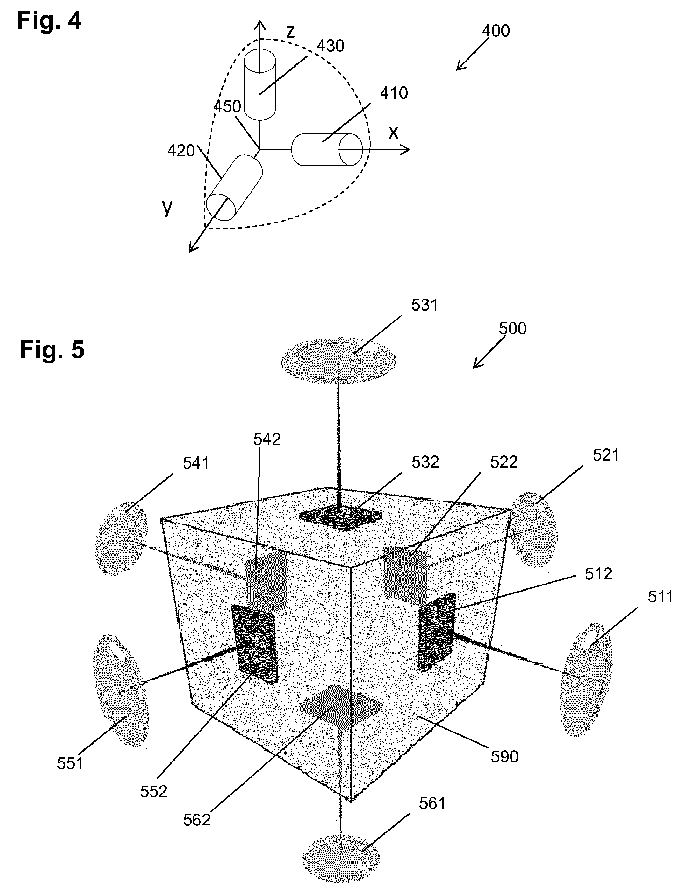

Figure 4 illustrates such arrangement 400 of three optical groups 410, 420, 430 for the image capturing device. The three optical groups 410, 420, 430 are arranged on space axes x, y, and z respectively, which are thus optical axes of the respective head lenses of the three optical groups. Namely, they are arranged in such a way that the optical axis of the head lens of the optical group 410 is orthogonal to both optical axes of the head lenses of the respective optical groups 420 and 430. Similarly, the optical axis of the head lens of the optical group 420 is orthogonal to both optical axes of the head lenses of the respective optical groups 410 and 430. The optical axis of the head lens of the optical group 430 is also orthogonal to both optical axes of the head lenses of the respective optical groups 410 and 420.

In Figure 4, the three optical axes x, y, z cut in one point 450. However, it is noted that the example of Figure 4 is not meant to limit the invention. In order to obtain three view images which capture the same common capturing area and which may be used for reconstruction, neither the orthogonality, nor the cutting of the axes in a common point are necessary.

On the other hand, the orthogonal arrangement is efficient in combination with 180° (or more) field of view since it provides a rather large common capturing area, which is captured by all three optical groups 410, 420, 430. This common capturing area to a quarter of a half sphere i illustrated in Figure 4 by a dashed line.

In Figure 4, the optical groups are only schematically represented. It is noted that they do not necessarily have all components on the same axis. In this figure, the axes x, y, z should however correspond to the optical axis of the respective optical group head lenses. In other words, any arrangements such as those described above with reference to Figures 3a and 3b may be employed. An optical group with components located on different optical axes may provide constructional advantages. In particular, the image capturing device may be constructed more compactly as mentioned above.

An output of the optical arrangement of Figure 4 three separate 2D images, all three including the commonly captured area viewed from a different point of view, i.e. under a different angle. Since the positions of the optical arrangements 410, 420, 430 with respect to each other is predetermined and thus a priori known, the commonly captured points in each image can easily be identified and matched for the purpose of the 3D reconstruction. With this exemplary arrangement, the commonly captured area (portion of the sphere) may be 3D reconstructed with a good quality for any viewpoint included in the common sphere portion. This is caused by the high diversity of the respective three views as the optical axes of the optical group head lenses are orthogonal to each other.

It is noted that the remaining portions of the sphere which are only captured by two optical arrangements may also be used for some 3D reconstruction with the limited translation tracking.

Figure 5 shows another particularly advantageous arrangement 500 of optical groups in the image capturing device.

The arrangement 500 includes six optical groups with the respective sensors 512, 522, 532, 542, 552 and 562 arranged in the middle of respective sides of a virtual cube 590. Correspondingly, also head lenses 511, 521, 531, 541, 551 and 561 can be considered to be arranged on the sides of a larger virtual cube). The head lenses of each three neighboring optical groups have their optical axes substantially orthogonal to each other. Advantageously, they have fields of view of at least a half sphere (180°). In general, the optical groups are arranged in such a way that each captured direction in the sphere can be seen by at least three optical groups. As can be seen in Figure 5, there are three pairs of optical groups. Two optical groups of each pair are arranged on the same optical axis but look into opposite directions. The optical axes of the three pairs are orthogonal with respect to each other. These three optical axes may cross in the same point. However, in another variant they do not have to cross in a common point.

In particular, each three adjacent optical groups capture a common quarter of a half sphere. Correspondingly there are eight sphere portions, each of which is captured at the same time with three different optical groups, namely eight sphere portions captured by triples of optical groups with head lenses 511-531-551, 511-551-561, 551-561-541, 531-551-541, 541-561-521, 541-531-521, 521-561-511, 521-531-511. This means that each spot of the sphere surrounding the optical arrangement 500 is captured by three cameras. Each of the above mentioned triples of optical groups correspond in their arrangement the optical arrangement illustrated in Figure 4.

In Figure 5 (similarly as in Figure 4, 3a and 2), the head lens and the sensor of each optical group are located on the same optical axis. However, also in this case, another arrangement of the optical groups may be employed.

Moreover, for the purpose of virtual reality capturing with possibility of larger translations, increasing of the size of the virtual cube on which the optical groups are located may be beneficial. Thus, the virtual reality camera may be adapted to adjust the size of the virtual cube and thus, the position of the optical groups along the optical axis of their respective head lenses. This may be achieved electro-mechanically by providing a user the possibility to control the size.Only the scene captured by the six lenses (each point by three cameras) can be interpolated. Thus, increasing this zone by extending the dimension of the cube helps to provide a larger navigation possibility. In other words, the bigger is the camera, the larger navigation becomes within the area becomes possible. Thus, for the purpose of the virtual reality, the VR cameras may have larger sizes - depending on the size of the desired area to be captured.

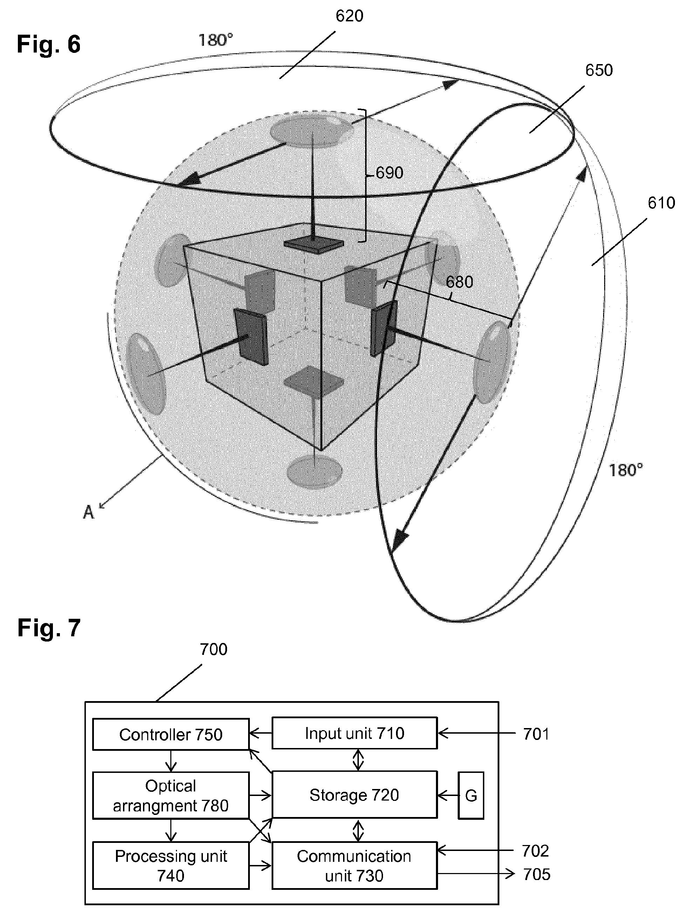

Figure 6 schematically illustrates the captured fields of view 610 and 620 of two respective optical groups 680 and 690 within the optical arrangement corresponding to Figure 5. In particular, the fields of view 610 and 620 form (at least) a half-sphere, i.e. 360 degrees around the optical axis of each respective head lens (the head lens is symmetrical) and 180° degrees over the plane in which the head lens is located (orthogonal to the optical axis).The two half-sphere fields of view 610 and 620 overlap in a quarter sphere region 650.

The optical arrangement of Figure 5 is particularly advantageous since it enables tracking of any translation within the sphere captured.

Although the above described optical arrangements provide strong advantages in terms of a tradeoff between a number of cameras employed and a quality of 3D reconstruction based on the captured images, they are not to limit the scope of the present invention. In particular, as mentioned above, other arrangements are possible, which may employ different number of optical groups and/or optical groups with field of view smaller than the 180°. The images captured by such arrangements will still allow for a high quality 3D reconstruction especially in the directions captured by at least three of the cameras.

The above arrangements are particularly suitable for capturing video frames, each including all images captured by the respective optical groups in parallel. Alternatively or in addition, they may be used to capture still images.

### Image capturing device (VR camera)

Correspondingly, Figure 7 illustrates an exemplary image capturing device 700 which includes optical arrangement 780 and a control unit 750 for controlling capturing of the images by the optical arrangement 780.

In particular, the optics 780 includes a plurality of optical groups facing in different directions and capturing a common area. For instance, the optics 780 may be one of the arrangements 400 and 500 shown in and described with reference to the respective Figures 4 and 5 or any other arrangements as mentioned above.

Advantageously, the control unit (controller) 750 is configured to capture video with a predetermined frame rate and to capture in each frame time instance an image by each optical group.

The control unit 750 may provide timing to capture the images for one frame in parallel, i.e. at least partially simultaneously. For instance, in general, a capturing of a first image by the first optical group is initiated at a time instance N, a capturing of the second image by the second optical group is initiated at a time instance N+m1 still during the capturing period of the first image, and a capturing of the third image by the third optical group is initiated at a time instance N+m1+m2 still during the capturing period of the second image and possibly also of the first image. In the same way, the capturing of further images by the respective optical groups may be initiated. However, in order to obtain a possibly high quality reconstruction, m1 and m2 are as close to zero as possible, meaning that the capturing of the scene by the plurality of oprical groups is preferably performed at the same time. This is because the scene may change between capturing of different views is there is a delay and thus, the reconstruction may show some artifacts. Accordingly, advantageously, sensors with an external trigger by the control unit are employed in the image capturing apparatus so that the reading-out from the sensors is performed substantially at the same time. The term "substantially" here refers to the fact that the synchronization circuits and clocks are not absolutely precise and thus, some misalignments in the synchronization and some further imprecision during the reading-out phase may occur. However, the above example is not limiting for the present invention. Another kind of timing may be applied by the controller. The images may also be captured without any overlap (sequentially), depending on the desired application (for instance still images) and the frame rate / speed of preview or real-time requirements for the application. The timing may be controllable over a user interface. For instance, the user may decide to capture a still image using one or more of selected cameras, to start or stop video recording or the like.

It is noted that the image capturing device of the present invention is not limited to capturing video (sequence of images). Alternatively, or in addition, it may be used for capturing still images which may be used to reconstruct 3D view of the captured common area. In such case, the control unit 750 merely provides timing for parallel capturing of the different views by the respective optical groups.

In order to initiate capturing of a video or a still image, the controller 750 may receive an instruction from an input unit 710 which may be part of the image capturing device 700. This instruction may be based on a user command directly received at the input 701 of the the input unit 710 via a user interface or on a timing pre-programmed by the user and stored in a storage 720 which may be also a part of the image capturing device 700.

According to a variant, the user interface is provided on the image capturing device. For instance, a touch sensor, touch screen, a button, voice input, or any other means for detecting a user input may be employed. According to another variant, user input is received 702 via a communication unit 730 from an external device having a user interface, such as a personal electronic device or a computer. These two variants may be both supported by the image capturing device 700. Accordingly, a user may decide which user interface to use.

Advantageously, the image capturing device comprises the communication unit 730. The communication unit 730 serves for exchanging data with an external device. Such external device is for instance a computer, a tablet, a smartphone or any other form of personal electronic device (PED), or an external storage such as a cloud or a particular network location or platform (e.g. youtube, a social network or the like). In addition or alternatively, the external device may be a headset for virtual reality viewing.

The communication unit 730 provides an interface to the external devices. The interface may be implemented in form of a supported protocol or a plurality of protocols for communication with the external devices either via a cable or wirelessly. The communication unit 730 includes a transmission and/or reception module with antennae or cable connector, amplifier(s), modulators and/or demodulators and other hardware parts known to a skilled person.

In particular, the communication unit 730 may provide a wireless interface over WiFi (IEEE 802.11 standard family), BlueTooth, cellular or any other interface. Alternatively or in addition, the communication unit 730 may provide a wired interface, for instance by means of an USB connection.

The communication means have at least one of an input 702 for receiving data from an external device and an output 705 for transmitting data to the external device. The input 702 may be used to receive instructions for initiating and/or terminating of the image or video capturing, instructions for selecting whether a video or a still image is to be captured, settings for the image capturing such as spatial resolution, frame rate, compression rate, video or image data format, exposure, etc. The output 705 may be used to transmit the captured images and possibly some meta data concerning the settings applied for the capturing and/or descriptors of the captured images provided by the user (via own user interface and the input 701 or via a user interface of the external device and over the input 702).

The image capturing device further includes the storage 720. The storage may be used to store some settings for capturing images and/or for storing the captured images. In particular, the captured images are read from the sensors of the respective optical groups and stored in a separable format in the storage. Here, the separable format means that the images captured by the respective different optical groups are stored as separate files or in one file from which they can be extracted separately from each other.

The images are stored together with an indication by which of the respective optical groups they were taken. This indication may be explicit (by storing an indication identifying the optical group such as an identifier of the optical group and/or a position of the optical group or any other descriptor) or implicit (given by a predefined sequence in which the images are to be stored). Accordingly, when the 3D view is to be interpolated, the knowledge of the optical group positions are used to match the image portions related to the same area captured from different views by the respective different optical groups.

In order to provide such knowledge oft he optical group position, each camera assembly is advantageously calibrated before capturing images therewith. According to a variant, the calibration is performed in the factory and maintained during the lifetime of the camera. This is possible if the mechanical construction of the image capturing device is strong and stable so that the optical groups cannot move with respect to each other. The calibration may be performed by viewing pictures with a predefined template (such as a grid) with all optical groups and calculate based on the correspondence of the same template points taken by different optical groups the angles/shifts between the optical groups.

Alternatively, user triggered or automatic recalibrations may be possible based on some predefined template images. The recalibration may also be performed each time the image capturing device is used (the camera may be dissabled for that purpose). A recalibration may be particularly relevant for image capturing devices with adjustable positions of the optical groups.

A separable format enables interactive viewing by the user and generating the view requested by the user based on only a subset of the captured images which is more efficient and less complex. The images may be stored/transmitted in the raw format (without further processing).

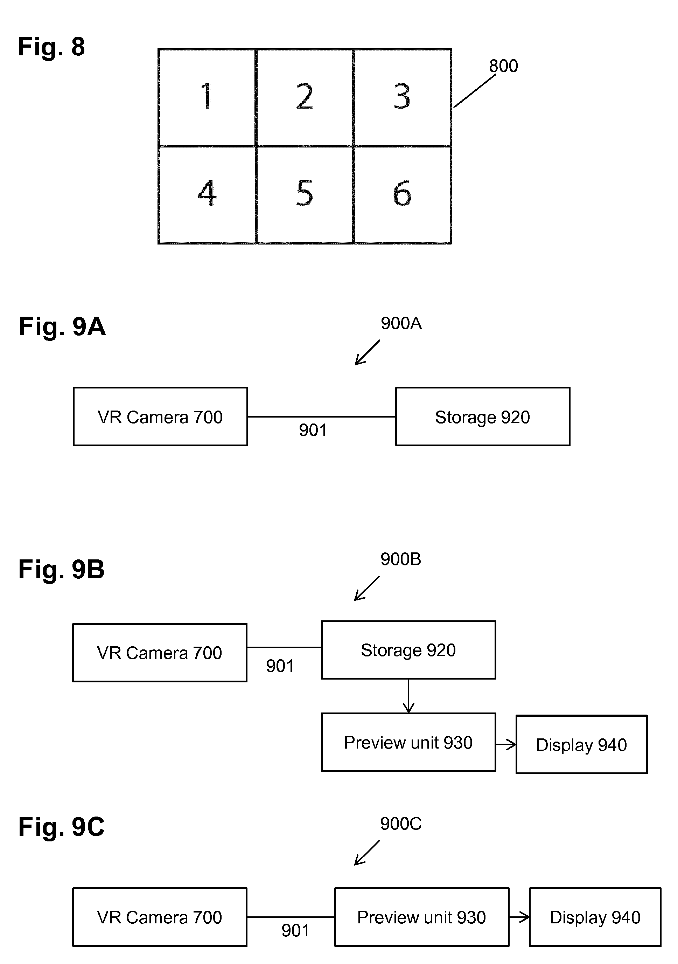

An example of storing the data corresponding to the captured images is shown in Figure 8. In particular, Figure 8 shows storing as a one image six 180° view images 1-6 captured by six respective optical groups for one video frame (or still image) within one file. However this is only an example and the captured image data and possibly further capturing information such as location of the cameras, their mutual position and position with respect to the captured scene, time or date or some additional information entered by the user may also be stored in the file. In practice it is merely important that a format is defined in which the order of the image pixel data is predefined so that it can be read at the viewer.

The files may be separate for the respective video frames. However, especially if compression is applied, the frames may be included in one file.

Alternatively, an image quality may be further improved by applying some image processing to the captured images. The image processing unit 740 may perform some image pipe processing including dewarping (for instance to compensate for fisheye effect), gain control, white balance, some filtering and/or compression of the captured images. Accordingly, the storage 720 may store images captured by the optical arrangement 780 and processed by the processing unit 740. Alternatively or in addition, the captured and processed images may be transmitted to the external device via the communication unit 730. In general, dewarping may be any transformation from the image capturing projection of the scene in the field of view through the lenses of the optical group into another desired projection (for instance planar) which is then provided for further processing stages or output.

In accordance with a variant, the image capturing device further comprises a gyroscope G for determining the position of the camera when capturing images. When the image capturing apparatus 700 is used to capture video, the gyroscope G may help to stabilize (compensate for camera position changes resulting in view changes from frame to frame) the captured video during rendering. In particular, the camera position measured the gyroscope G is advantageously stored in the storage 720 and/or transmitted together with the captured images and may be used at the 3D viewer.

The image capturing device may be located within a housing.

It is noted that the above described controller 750, image processing unit 740, and a part of the communication unit 730 (digital processing such as protocol stack implementation) do not need to be implemented by separated hardware elements. They may be implemented by a one or more common processor.

The image capturing device 700 described above serves for mere capturing of images in a manner particularly suitable for 3D viewing. Thus, the image capturing device 700 may be used as a camera for virtual reality, i.e. a VR camera.

### Virtual reality system

In order to provide not only a device for capturing images but also a possibility of viewing the captured content, the image capturing device may be provided within a system comprising components for generating previews and/or 3D views of the captured images as will be exemplified by the following embodiments.

The image capturing device (VR camera 700) may thus be a part of a virtual reality system 900A illustrated in Figure 9A. The VR system further comprises an external storage 920 for storing the captured images in a separable format. Such storage may be accessible by any further devices configured for previewing or 3D viewing of the captured content.

According to a first embodiment of the image capturing system, the VR camera 700 as described with reference to Figure 7 has its own storage 720. However, this storage is limited in size. Thus, the VR camera 720 is connected to the external storage 920 and configured to transmit the captured images over a medium 901 (wired or wireless) and the corresponding interface provided by the communication unit 730. The transmission of the captured images may be performed in real-time (during capturing of successive images) if sufficient capacity is provided by the interface. Such external storage may be further accessible to further devices capable of displaying the captured content. For instance, the external storage 920 may be a cloud storage or a storage in a preset network location, or a computer storage of a computer to which the VR camera 720 is connected.

Apart from the VR camera 700, a virtual reality system 900B shown in Figure 9B advantageously further comprises a preview unit 930 for generating a live preview by stitching at least two images captured by two optical groups. According to a second embodiment of the VR system, the preview unit 930 is extern as illustrated in Figure 9B. The VR camera captured images and provides them to an external storage. The preview unit 930 retrieves from the memory two or more images for each frame and stitches them together to obtain a stitched image covering a broader view. For instance, for the VR camera with optical arrangement described with reference to Figure 5, in order to obtain a spherical preview, two images captured by the respective optical groups located on the opposite sides of the virtual cube 590 are stitched. Since such opposite optical groups each captures 180 degrees view, each of the two respective captured images coves an opposite half-sphere view. Accordingly, after stitching of only these two images, a preview of the full spherical view may be generated. Even if the preview images do not provide the 3D view with translation tracking possibility, a user may use them to preview/check the scene (currently being) captured.

However, it is noted that the previewing unit may alternatively or in addition be configured or configurable to merely generate a preview based on the separate captured images without stitching any of them. The VR system may further provide user interface for a user to request a preview and/or select the preview type.

The preview can be provided during capturing of further images of the same video, i.e. live. Preferably the VR system 900C further comprises a display device 940 for displaying the stitched preview images or the captured images as a preview without further processing them.

The preview unit 930 as well as the storage 720 may be both part of a computer such as a laptop a desktop, a tablet or a smartphone. The preview unit 930 functionality may be implemented as an application running on a computer processor. The display device 940 may be - correspondingly a display / screen of the computer or an external device such as a headset or an external screen or projector.

Alternatively, according to a third embodiment, as shown in Figure 9C, in the VR system 900C the preview unit 930 is directly connected to the VR camera 700 over the medium 901 and retrieves the captured images for generating the preview therefrom and displaying it on the display 940. Advantageously, the VR system 900C is located within the same housing. In other words, the VR camera is supplemented with the preview functionality. The preview may be a live preview provided during capturing of the same video.

However, a variant may be provided in which the preview unit 930 is implemented in a computer external with respect to the VR camera 700 and the display device 940 is another external device such as headset.

In any of the above three embodiments of the VR system 900A, 900B and 900C, the preview unit 930 may be configured to perform at least one of stitching, blending the images on stitching boundaries, performing white balancing, exposure control, gain control, or down-sampling frame rate. This is especially beneficial, if these processing steps are not performed by the VR camera 700 (by its processing unit 740), for instance if the VR camera outputs 705 captured images in the raw format or otherwise unprocessed compressed format.

As a compression, any well-known video or still image standard applying lossy and/or lossless compression may be used, such as H.264/AVC, H.265/HEVC, jpeg2000 (for video) or jpeg, png, or the like.

The stitching of the images may be performed according to a preset mapping taking into account the relative positions of the capturing cameras. The stitching is merging of images to form a resulting image in which the stitching boundaries are not visible, i.e. redundant portions captured in both images are removed.

The preview unit may be configured to generate the preview image based on a captured frame within time duration not longer than the time between capturing of two frames. This enables an immediate live previewing of the captured scene. However, the present invention is not limited thereto and the preview may be generated within duration not longer than a time period between capturing a multiple of frames (for instance, for frame rate f, the preview may use a frame rate f/x corresponding to the processing time for preview less than x/f). Such preview would have the correspondingly reduced frame rate. This approach is also feasible for high quality capturing (i.e. high spatial and/or temporal resolutions).

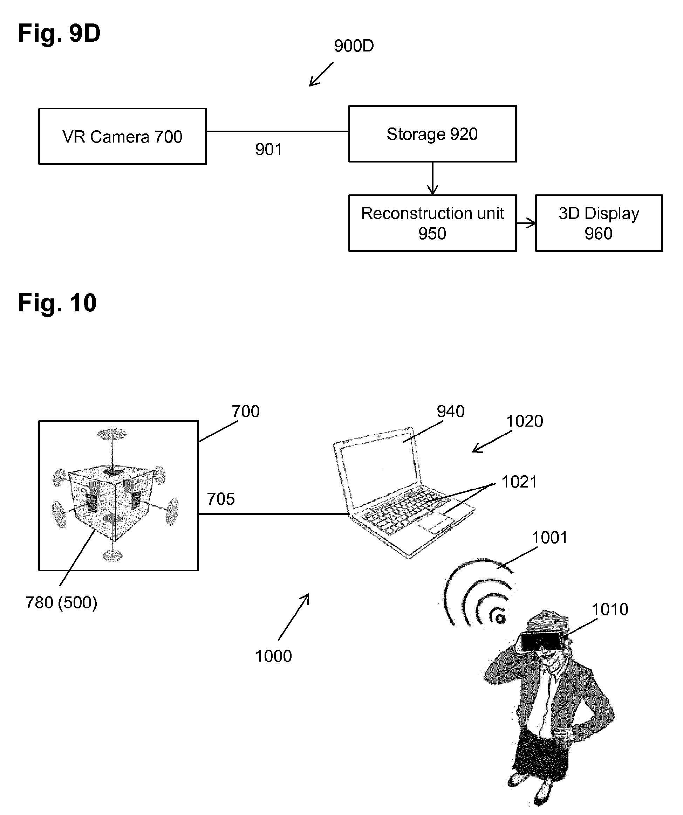

According to a fourth embodiment, schematically illustrated in Figure 9D, the virtual reality system 900A, 900B or 900C may further comprise a user interface (not shown in Figure 9D) for receiving a user input indicating a desired view point. Correspondingly, it may further include a reconstruction unit 950 for generating a 3D view from the desired view point by combining images captured by at least three of the optical groups to obtain each point of the generated view. The VR system may further comprise a 3D displaying unit 960, which receives the view generated by the reconstruction unit 950.

The reconstruction unit 950 is provided with the captured images as well as with information concerning the optical group position (which may be fixedly calibrated or recalibrated and stored) from which the respective images have been captured. Based thereon and on a user input the reconstruction unit 950 generates a 3D view. The 3D view preferably includes two stereoscopic images (each for one eye) which can be displayed in a displaying apparatus such as VR headset. The user input provides the desired point of view. The user input may be a position of user's head detected by the headset.

Figure 10 illustrates a fifth embodiment of a VR system 1000, in which the user interface is provided via a headset 1010. The headset 1010 also comprises a head position detector capable of detecting the movements of the user's head. The headset is connected via a wireless interface 1001 with a computer 1020 and provides the computer 1020 with the current head position. The computer 1020 embeds the reconstruction unit 950 for generating 3D view from the viewpoint corresponding to the user's head position. In particular, the reconstruction unit 950 may be embedded within software running on a processor of the computer 1020. The reconstructed 3D view images are then communicated over the wireless interface 1001 to the headset 1010 which further comprises the 3D display device 960 for displaying the reconstructed 3D view.

The computer 1020 further comprises the storage 920 for storing images captured by the VR camera 700 and user interface 1021 for instructing the computer 1020 to generate a 3D view or a preview. The user interface 1021 may be any buttons, keys, touch pad, touch screen or the like. The computer 1020 is illustrated as laptop in Figure 10. However, it may be any computing device such as desktop PC, tablet, smart phone, etc. The computer 1020 may further embody the preview unit 930 for generating preview image and display 940 for displaying the generated preview. In particular, the preview unit 930 may be implemented by a computer application running on the computer 1020 and the display 940 may be the screen of the computer 1020 and/or the display 950 of the headset 1010 may be used as the preview display 940.

### Methods for providing virtual reality

The present invention also provides methods for capturing and displaying 3D videos which may be executed by the VR system as described above. Such methods may be implemented within a software for the system components such as computer, camera or headset.

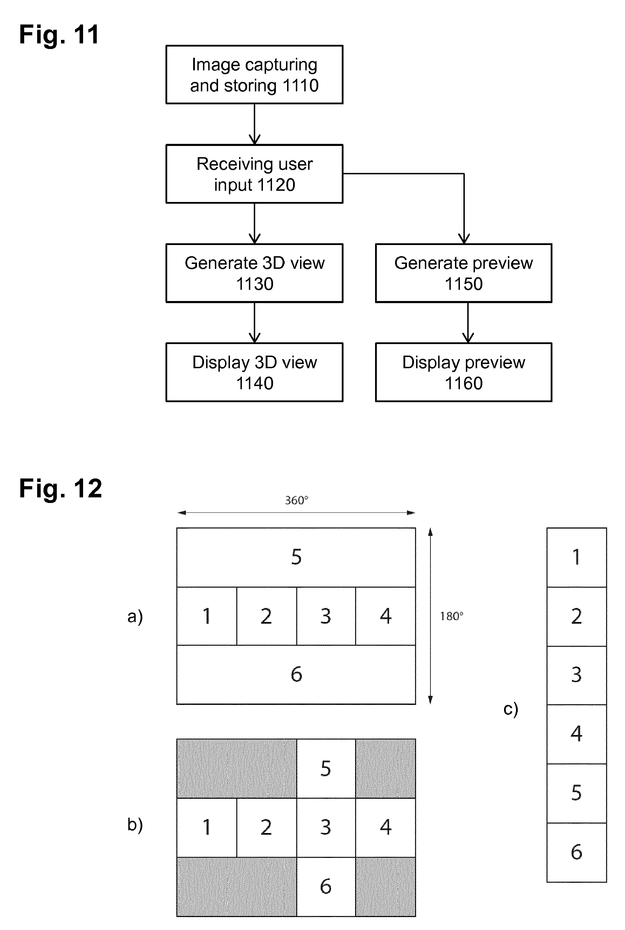

Figure 11 shows a flow diagram illustrating steps of a method according to an embodiment of the invention. The method comprises the steps of capturing 1110 a frame of a 3D view of a predetermined scene area comprising capturing at least three images of the predetermined scene taken by three respective optical groups viewing the predetermined scene from different directions, receiving 1120 a user input indicating a desired view point, generating 1130 a 3D view of the predetermined scene seen from the desired view point by combining the captured at least three images, displaying 1140 the generated 3D view of the predetermined scene.

The image capturing 1110 may be performed by the respective three optical groups described with reference to Figures 4-6, each adapted to capture at least a half-sphere, the three optical groups being arranged orthogonally to each other. The captured images are stored in a separable format.

It is noted that the method may further comprise at least one of the following image correcting steps: dewarping of the captured images, white balance, exposure control, or gain control. These steps may be performed either after the capturing step 1110 and before storing the images or within the step of generating the 3D view 1130.

Alternatively or in addition, in accordance with the received user input in step 1120, the method may include a step 1150 of generating a preview based on the images captured and stored in step 1110 and a step of displaying 1160 the generated preview.

The above described method may be implemented in an application to be run on the computer 1020. This application may instruct the VR camera 700 to perform the capturing or to provide the application with the captured images - corresponding to step 1110. The application may further wait for a user input and as soon as the user input is received in step 1120, the application may generate 1150 a preview of the captured images or a 3D view 1140 based on the captured images, depending on the user input received. The application may then instruct displaying 1160 of the generated preview on a display 940 of the computer or on a display of a headset and/or may instruct displaying 1140 of the generated 3D view on the display of the headset.

As discussed above, a preview may be generated in real-time, possibly with a reduced frame rate, based on stitching two or more captured images. However, the present invention is not limited thereto. The preview may also be generated as a still image or video resulting from a simple merging of the captured images, as may also be performed for any cubic camera, for instance for a cubic camera with a field of view smaller than 180°.

Such cubic camera has optical groups arranged as shown in Figures 5 and 6 and as described with reference thereto. In particular, six cameras are arranged on sides of a virtual cube. Each optical group takes a respective image, the images captured by all optical groups at substantially the same time are then stored. Figure 12 illustrates some formats in which the 6 images may be stored as one image and/or previewed. Example a) is advantageous especially for images captured and possibly also stitched to form a spherical image. In this format, four images 1-4 are captured by optical group pairs, each optical group of a pair looking into opposite direction. Thus, optical groups capturing images 1-4 cover a panorama. Images 5 and 6 are captured by optical groups looking into opposite directions and forming the third pair of optical groups. The optical axis/axes of the third pair are advantageously orthogonal to the optical axes of the first and second pair (axes of the respective head lenses).

For the storing and preview of VR images captured by the camera as illustrated in Figure 5 and 6, examples b) and c) may be more convenient. Example b) shows a cubic arrangement which provides a more intuitive picture of how the images cover the scene captured. In particular, the cubic arrangement shows images 1-4 captured by the first two pairs of optical groups in a row and shows the images 5 and 6 on the top of image 3 (or, alternatively image 2). This arrangement may be directly (or after spatial down sampling) used to form previews. Example c) is an arrangement in which all images captured by the six respective optica groups are arranged below each other. Another arrangement has briefly been discussed above with reference to Figure 8. This arrangement is most compact. According to a variant, the 6 captured images are merged and stored in one of predefined face formats (such as those in Figure 8 or 12).

For the purpose of a preview, user may select via a user interface, which format is to be displayed. This feature may be implemented by any viewer such as a software running on a computer or smart phone or tablet or the like. Alternatively or in addition, the user may also instruct the viewer to store images in one of the selected formats.

In other words, in this variant a cubic camera image viewer is provided which inludes a user interface for receiving a user input, a storage and a preview unit for displaying a cubic face projection. The user may select with the user input one of predefined cubic face projections (or another projection) for preview. Accordingly, the preview unit retrieves the stored images in the stored projection face, transforms them into the selected projection face, and displays the images in the selected projection face to the user. Based on another user input, the image may be saved in the selected projection. In order to facilitate this, the type of the projection face may also be stored within the image file.

Figures 12 and 8 show projection faces particularly suitable for flat viewing. It is noted that another viewing may also be implemented and selectable such as circular, or the like.

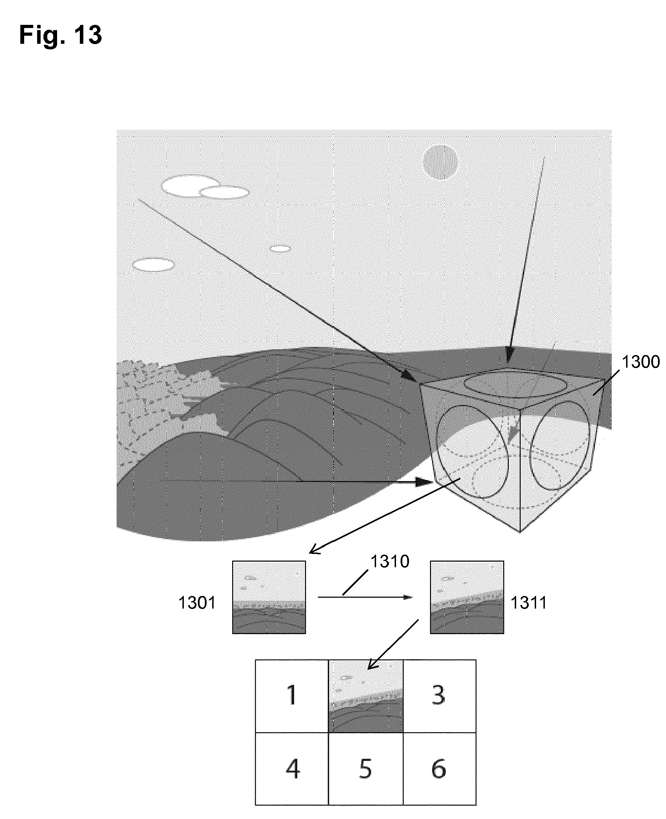

Figure 13 shows an illustration of images captured by a cubic camera. A scene is captured by a cubic camera 1300 with arrangement illustrated by a cube. Each image 1301 is transformed (dewarped) 1310 into the desired projection and the transformed image 1302 is stored in the cubic face in the predefined image portion, here position of image 2. The processing is not necessarily only the dewarping but may also include further operations such as gamma correction, white balance, some filtering or cropping or the like.

Summarizing, the present invention relates to an image capturing device suitable for capturing images for 3D reconstruction of the captured scene. Such image capturing device comprises a plurality of optical groups facing in different directions, wherein each optical group comprises at least a head lens and an image sensor. The optical groups are arranged in a manner that their respective fields of view overlap in a common capturing area. The image capturing device further comprises a controller for controlling the at least three optical groups to capture respective at least three images in parallel.

## Claims

1. An image capturing apparatus for capturing images for virtual reality rendering, comprising:
at least three optical groups facing in different directions, wherein each optical group comprises at least a head lens and an image sensor; the at least three optical groups being arranged in a manner that their respective fields of view overlap in a common capturing area;
a controller for controlling the at least three optical groups to capture respective at least three images in parallel.

2. The image capturing apparatus according to claim 1, wherein the at least three optical groups are arranged to have optical axes of the respective head lenses substantially orthogonal, in particular orthogonal, to each other.

3. The image capturing apparatus according to claim 1 or 2, comprising six optical groups with head lenses arranged on sides of a virtual cube wherein each three head lenses of the respective three neighboring optical groups having their optical axes substantially orthogonal to each other, so that each captured direction in the space can is seen by at least three optical groups.

4. The image capturing apparatus according to any of claims 1 to 3, wherein the head lens and the sensor of each optical group are located on the same optical axis.

5. The image capturing apparatus according to any of claims 1 to 4, wherein the control unit is configured to capture video with a predetermined frame rate and to capture in each frame time instance an image by each optical group.

6. The image capturing apparatus according to any of claims 1 to 5, wherein the control unit is configured to capture images with all optical groups substantially simultaneously.

7. A virtual reality system comprising the image capturing device according to any of claims 1 to 6, further comprising a storage unit for storing the captured images in a separable format.

8. The virtual reality system according to claim 7, further comprising a preview unit for generating a live preview by stitching at least two images captured by two optical groups including at least one of blending the images on stitching boundaries, performing white balancing, exposure control, gain control, stabilization of the captured video based on gyroscope data or down-sampling of frame rate.

9. The virtual reality system according to claim 7 or 8, including
a user interface for receiving a user input indicating a desired view point,
a rendering unit for generating a 3D view from the desired view point by combining images captured by at least three of the optical groups to obtain each point of the generated 3D view.

10. The virtual reality system according to claim 7, wherein the preview unit is configured to generate the preview based on a captured frame within time duration not larger than the time between capturing of two frames.

11. A method for capturing and displaying 3D videos, comprising the steps of capturing a frame of a 3D view of a predetermined scene area comprising capturing at least three images of the predetermined scene taken by three respective optical groups viewing the predetermined scene from different directions,
receiving a user input indicating a desired view point,
generating a 3D view of the predetermined scene seen from the desired view point by combining information from the captured at least three images,
displaying the generated 3D view of the predetermined scene.

12. The method according to claim 11, wherein the three images are taken by respective three optical groups each including a head lens and a sensor and adapted to capture at least a half-sphere, the three optical groups being arranged orthogonal to each other.

13. The method according to claim 11 or 12, wherein the step of capturing a frame of a 3D view is a step of capturing six images of a spherical 3D view, wherein each direction is captured by at least three of six optical groups arranged on sides of a virtual cube and each having a field of view of at least 180°.

14. The method according to any of claims 11 to 13, comprising at least one of the following image correcting steps:
- dewarping of the captured images,
- white balance,
- exposure control, or
- gain control,
and further comprising storing the corrected images in a separable manner.

15. The method according to any of claims 11 to 14, comprising a step of generating a preview of the captured frame by stitching at least two of the images captured for the frame.
